# EUROPÄISCHE PATENTSCHRIFT

(11) **EP 0 219 700 B1**
(45) Veröffentlichungstag und Bekanntmachung des Hinweises auf die Patenterteilung: **24.11.1993**
(21) Anmeldenummer: 86112968.2
(22) Anmeldetag: 19.09.1986
(51) Int. Cl.: G02F 1/133

(54) **Grossflächige elektrooptische Anzeigeeinrichtung**
Large-surface electro-optical indicator
Indicateur électro-optique à grande surface

(30) Priorität: 25.09.1985 DE 3534116; 09.01.1986 DE 3600398
(43) Veröffentlichungstag der Anmeldung: 29.04.1987
(73) Patentinhaber: Valeo Borg Instruments Verwaltung GmbH, 75196 Remchingen (DE)
(72) Erfinder: Cremers, Rolf A., Dr., D-7501 Marxzell (DE); Barth, Manfred, D-7547 Wildbad (DE)
(74) Vertreter: Hofmann, Gerhard, Dipl.-Ing. Patentassessor

(56) Entgegenhaltungen:
- EP-A- 0 024 482
- GB-A- 1 411 310
- GB-A- 2 024 444
- SID 84 DIGEST, Seiten 51-54

## Beschreibung

Die Erfindung betrifft eine Anzeigeeinrichtung gemäß dem Oberbegriff des Anspruches 1.

Eine solche Anzeigeeinrichtung ist aus der EP 0 024 482 A2 bekannt. Dort ist angestrebt, die sichtseitige Entspiegelung einer einzelnen Flüssigkristallzelle nicht durch Mattieren ihrer Frontscheibe zu erzielen, sondern durch eine gegenüber der Zellen-Frontscheibe konvex verlaufende und damit sichtseitig konkave Filterfolie. Um dem Polarisationsfilter diese Krümmung zu geben, wird er an der Rückseite des gewölbten Deckglases einer Kraftfahrzeug-Armatur angeordnet, die mit einer Kombination aus herkömmlichen elektromechanischen Anzeigeneinrichtungen und aus elektrooptischen Anzeigen bestückt ist; wobei der Gesamtaufbau einer solchen Anzeigeeinrichtung offengelassen bleibt. Alternativ ist dort vorgesehen, die gewölbt verlaufende Filterfolie in herkömmlicher Weise an der Frontscheibe der Zelle anzuordnen, nun aber nicht mehr parallel zu ihrer sichtseitigen Ebene, sondern unter Zwischenlage eines gewölbten durchsichtigen Körpers.

Aus dem SID-Digest 1984, Seiten 51 - 54, ist es bekannt, eine matrixartige Anordnung von komplett ausgestatteten Flüssigkristallzellen (LCD-Modulen) unmittelbar hinter einer sichtseitig schwarz eingefärbten Haltescheibe zu montieren, über die selbst nichts weiter ausgesagt ist. Offenbar handelt es sich aber bei dieser Haltescheibe um eine Lochrasterscheibe zur Aufnahme der einzelnen Matrix-Module; oder aber um eine durchsichtige Scheibe mit in der Bedruckung ausgesparten Fensterbereichen. Jedenfalls liegt in größerem Abstand vor dieser Haltescheibe eine sichtseitig mattierte, die Montagestellen der Modul-Matrix überspannende Frontscheibe. Ein solcher Aufbau weist gravierende Nachteile auf, insbesondere hinsichtlich des Auftretens störender Reflexionen zwischen der schwarzen Haltescheibe und der matten Frontscheibe. Auch ist ein derartiger Aufbau zu kostenintensiv, wenn es darum geht, eine aus gestalterischen Gründen großflächige Armaturenbrett-Öffnung etwa für eine Kraftfahrzeug-Anzeigeeinrichtung mit nur dagegen kleinflächigen und verstreut positionierten Flüssigkristallzellen auszustatten.

Denn die Erfindung bezieht sich insbesondere auf komplexe Kraftfahrzeug-Armaturentafeln, wie eine in "Technische Rundschau" Nr. 14/1985 (Seiten 8/9) gezeigt ist. Dort wird eine Vielzahl von Wechsel- und von Fest-Informationen elektrooptisch mittels einer sehr komplexen, großflächigen Flüssigkristallzelle dargestellt. Ähnliche Verhältnisse hinsichtlich der großen geometrischen Abmessungen von Anzeigeeinrichtungen liegen auch bei anderen Land- und Luftfahrzeugen oder beispielsweise in der Meß- und Wartentechnik vor. Stets geht es darum, innerhalb eines, in einem Gehäuse ausgesparten, relativ großflächigen Bereiches eine Vielzahl von diskret anzusteuernden Informationsdarbietungen neben Festinformationen zu realisieren, wobei die Größe der Anzeigefläche aus gestalterischen Gründen durchaus erheblich größer sein kann, als für die Wechsel- und Festzeichen-Informationsdarbietungen an sich erforderlich wäre.

Von besonderer Problematik ist bei derartigen einstückiggroßflächigen Flüssigkristall-Anzeigeeinrichtungen die technologische Schwierigkeit, einen konstanten Plattenabstand über die gesamte Zellenfläche zu gewährleisten, weil Verformungen von den in der Randversiegelung und in der Zelle enthaltenen Distanzpartikeln zu Schwankungen der optischen Weglänge und damit zu Anzeige-Informationsverfälschungen oder jedenfalls -farbänderungen führen. Auch führen Toleranzen in den Glasplanität und die notwendige homogene Verteilung von Spacern in der Zelle zu einer erheblichen Minderung der Ausbeute bei der Serienherstellung großflächiger Displays. Die dadurch bedingten überproportionalen Fertigungskosten wirken sich insbesondere dann aus, wenn (beispielsweise für billigere Kraftfahrzeugmodelle) zwar aus ästhetischen Gründen eine großflächige Armaturenbrett-Öffnung von einer Anzeigeeinrichtung ausgefüllt sein soll, die aber nur einen reduzierten Informationsumfang aufweist, für die Informationsdarstellung also gar nicht des großen Anzeigebereiches bedürfte.

Für solche Anwendungsfälle ist der aus der genannten Vorveröffentlichung bekannte Aufbau einer Anzeigeeinrichtung kaum geeignet, da die zwangsläufig zwischen der Rückseite der Deckscheibe und den Frontseiten der TN-Displays auftretenden Mehrfachreflexionen zu einer starken Kontrastminderung und darüberhinaus bei geringem Betrachtungsabstand zu Irritationen wegen unterschiedlicher Reflexe bei unterschiedlichen Betrachtungswinkeln führen. Um diese äußerst störenden Reflexerscheinungen zu vermeiden, könnte man zwar daran denken, in der Deckscheibe vor den einzelnen Zellen Fensterbereiche auszustanzen. Aus ästhetischen Gründen und zum Schutz der Zellenoberflächen gegen Verschmutzung und mechanische Beschädigung ist jedoch eine geschlossene Sichtfläche anzustreben. Ein definiertes Ausgießen der Durchbrechungen mit einem geeigneten Material ist fertigungstechnisch sehr aufwendig und optisch kritisch, zumal die anzustrebende einheitlich-geschlossene Wirkung der großflächigen Anzeigeeinrichtung dadurch nicht herstellbar ist. Man wird deshalb sichtseitig vor einer durchbrochenen Deckscheibe eine durchsichtige Frontplatte anbringen müssen - mit dem Erfolg, daß die störenden Reflexe sogar verstärkt wieder auftreten.

In Erkenntnis dieser Gegebenheiten liegt der Erfindung die Aufgabe zugrunde, eine großflächige Anzeigeeinrichtung gattungsgemäßer Art derart auszubilden, daß sie unter Gewährleistung der gestalterischen Aspekte und der Anforderungen an kontrastreiche, in ihrer visuellen Aufnahmemöglichkeit möglichst nicht durch wechselnde Reflexionserscheinungen gestörte Informationsdarbietungen preisgünstig herstellbar ist.

Diese Aufgabe wird erfindungsgemäß im wesentlichen dadurch gelöst, daß die gattungsgemäße Anzeigeeinrichtung gemäß dem Kennzeichnungsteil des Anspruches 1 ausgebildet ist.

Auch nach dieser Lösung werden also, aus Kostengründen, soweit es das Design erlaubt, Zellen mit vergleichsweise geringen Abmessungen eingesetzt, deren Herstellungstechnologie heute ohne weiteres beherrscht wird und eine preisgünstige Massenfertigung erlaubt. Dabei werden aber nun störende Reflexionen nicht mittels Durchbrechungen in der die Montagebereiche kaschierenden Deckscheibe vermieden, sondern bei ununterbrochener Deckscheibe durch eine praktisch reflexfreie Anordnung der Zellen hinter der Deckscheibe. Dabei kann der gesamte beispielsweise in einem Armaturenbrett oder in einem Maschinen-Kontrollpult zur Verfügung gestellte Anzeigebereich von einer diesen Bereich, also die Sichtfläche der Anzeigeeinrichtung insgesamt, überdeckenden Scheibe abgeschlossen sein, die als Abdeckung für die dahinter angeordneten individuellen - jeweils gängige kleinere Abmessungen aufweisenden - Flüssigkristallzellen (Displays) dient. Diese sind dann z.B. durch optisch angekoppelte Verklebung an der, dem Betrachter abgewandten, Rückseite der Deckscheibe hinter durchsichtigen, der Geometrie der Zellen angepaßten, Fenster-Bereichen gehaltert. Wenn die Analysatoren wie üblich auf den Zellen-Frontplatten angeordnet sind, ist für deren jeweilige Befestigung hinter dem zugeordneten Deckscheiben-Fensterbereich ein transparenter Kleber einzusetzen, dessen Brechungsindex in der Größenordnung des geometrischen Mittels der Brechungsindezes einerseits am Fensterbereich der Deckscheibe und andererseits auf dem frontseitigen Polfiltermaterial liegt.

Es kann aber auch der Analysator unmittelbar hinter dem Deckscheiben-Fensterbereich angeordnet sein; maßgeblich für die Kleber-Auswahl ist dann jeweils der Brechungsindex der Deckscheibe am Fensterbereich und der dahinter gelegenen (nun also nicht mit Polfilter-Material belegten) Zellenfrontplatte.

Im übrigen ist die Scheibe undurchsichtig, ggf. in einer den Design-Anforderungen angepaßten Einfärbung ausgerüstet. Bei der Scheibe kann es sich einfach um ein durchsichtiges oder durchscheinendes Trägermaterial, etwa eine Kunstglasscheibe mit farbiger Ausrüstung oder eine rückseitig eingefärbte Polykarbonatplatte handeln. Dabei ist die Sichtseite der (in der Regel nicht genau lotrecht zu betrachtenden) Scheibe bzw. gegebenenfalls einer diese abdeckenden Farb-Folie, also die Sichtseite der Deckscheibe der Anzeigeeinrichtung, zweckmäßigerweise aufgerauht, mattiert oder mit einer dünnen Rauhlack-Schicht belegt, um betrachterseitige Reflexionen zu vermindern, aber ohne den Kontrast durch Unschärfen im Randbereich angezeigten Informationen übermäßig zu verschlechtern.

Da übliche Polfilter von Flüssigkristallzellen einen Brechungsindex von n=1,5 aufweisen, und wenn die Anzeige-Deckscheibe beispielsweise aus Acryl-Material mit einem optischen Brechungsindex von n=1,49 ausgebildet (nämlich als ebene Platte geschnitten oder dreidimensional verwölbt ausgeformt) ist, wird für die Befestigung der mit Analysatoren bestückten Zellen hinter der Deckscheibe als durchsichtiger Kleber ein Material mit einem optischen Brechungsindex in der Größenordnung von ebenfalls etwa n=1,5 gewählt; wie es etwa gegeben ist bei dem Material, das unter der Bezeichnung E 301 von der Firma Epotek am Markt ist. Aber auch andere in der optischen Technik bekannte Klebermaterialien sind verwendbar; wobei erforderlichenfalls deren optischer Brechungsindex auf die wünschenswerte Größenordnung eingestellt werden kann, um Verluste in der Verbindung zwischen der Deckscheiben-Rückseite und der Zellen-Vorderseite (mit oder ohne Analysator) möglichst gering zu halten.

Für großtechnische Anwendung, etwa in der Großserienfertigung; ist die Einstellung der optischen Eigenschaften eines solchen Klebers zur Befestigung einer Zelle hinter der Deckscheibe, unter optischer Ankopplung über die Klebeschicht zum Zellen-Analysator oder Zellen-Frontglas, sowie die gleichförmige Ausbildung der Klebebefestigung unter Umständen kritisch, jedenfalls produktionstechnisch kostenaufwendig. Auch ist in der Massenfertigung das Einhalten der vom Design her geforderten Toleranzen bei der gegenseitigen Positionierung von hinter die Deckscheibe geklebten Displays problematisch. Schließlich sind Beschädigungen des Polmaterials und der Deckscheibe-Rückseite kaum auszuschließen, wenn nur eine einzelne Zelle z.B. wegen einees Defektes ausgetauscht werden soll und dafür die Klebeverbindung wieder gelöst werden muß.

Gemäß einer bevorzugten Weiterbildung der erfindungsgemäßen Lösung wird deshalb auf eine optische Anpassung über eine Klebeschicht verzichtet indem die jeweiligen Zelle separat, ohne feste Verbindung, hinter dem zugeordneten Fensterbereich der Deckscheibe positioniert wird; während ihr Zellen-Analysator unmittelbar auf die Deckscheibe-Rückseite aufgebracht ist. Die dann zwangsläufig an der sichtseitigen Oberfläche (Frontscheibe) der Zelle auftretenden Reflexionen werden durch die Absorption der nun nicht direkt auf der Zelle (sondern hinter der Deckscheibe) angebrachten Filterfolie gedämpft, treten also selbst bei reflexiven Betrieb der Anzeigeeinrichtung praktisch nicht mehr störend in Erscheinung. Die Zellen selbst (also ohne Analysatoren auf ihren Deckscheiben) können unter einem unkritischen Luftspalt leicht auswechselbar hinter der Deckscheibe gehaltert sein.

Nach der erfindungsgemäßen Lösung für eine technologisch unkritisch und preisgünstig herstellbare großflächige Anzeigeeinrichtung ergeben sich ferner besonders günstige Möglichkeiten der Festzeichen-Darstellung, bei denen es sich beispielsweise um Maß-(Dimensions-) -Angaben zu den Wechselinformationen, um Erläuterungen zu Warnsignalen oder einfach um dekorative Elemente wie Umrahmungen bestimmter Teilbereiche der Anzeigeeinrichtung zur visuellen Gruppierung bestimmter Einzelanzeigen handeln kann. Bei großflächigen Flüssigkristallzellen bedarf es für solche Festzeichendarstellung (deren Darbietung also nicht elektrooptisch umschaltbar sein soll) besonderer Maßnahmen bei der Zellenfertigung wie etwa der Kammerausbildung oder der Alignmentzerstörung in bestimmten Bereichen der Zelle, um dort den Aufbau der Schraubenstruktur der Flüssigkristallmoleküle zu unterbinden und damit einen bestimmten optischen Eindruck (also die Festzeichen-Angabe) örtlich zu fixieren; denn ein Aufdruck von Festzeicheninformationen auf der Vorderseite einer Flüssigkristall-Zelle, also auf dem vorderen Polfilter (Analysator) oder Glas, vermindert ebenfalls die Fertigungsausbeute. Nach der erfindungsgemäßen Ausbildung der großflächigen Anzeigeeinrichtung ergibt sich nun die Möglichkeit, die Festzeichen-Darstellung unmittelbar an der Deckscheibe, in entsprechender geometrischer Nachbarschaft zur zugeordneten Zelle für die Wechselinformationsdarbietung, auszubilden, beispielsweise als Aufdruck im Positiv- oder im Negativkontrast auf die Vorderseite oder hinter einem entsprechend konfigurierten transmissiven Bereich auf die Rückseite der Deckscheibe. Geometrisch beliebig komplizierte Festzeichendarbietungen oder Gestaltungsgraphiken können also durch einfache Druckverfahren auf der Deckscheibe realisiert werden, sie bedürfen nicht fertigungstechnisch kritischer und teurer Eingriffe in den Herstellungsprozeß der Flüssigkristallzellen selbst.

Parallaxeprobleme zwischen der Wechselzeichen-Darbietung aus der Zelle und der benachbarten Festzeichen-Darstellung auf der Deckscheibe sind bereits durch die optische Wirkung des angepaßten Klebematerials für die Befestigung der Zelle hinter der Deckscheibe weitgehend reduziert. Darüberhinaus ergeben sich fertigungstechnisch einfache Möglichkeiten zur noch weitergehenden Reduzierung etwaiger Parallaxeprobleme, indem die Festzeicheninformationen nicht direkt auf eine frontseitige oder rückseitige Fläche der Deckscheibe aufgedruckt werden, sondern durch entsprechend geometrisch gestaltete Lichtleitkörper ausgebildet werden, die hinter durchsichtigen Bereichen der Deckscheibe an deren Rückseite befestigt und z.B. seitlich angestrahlt werden und die sich bis etwa in die optisch wirksame Mittelebene der informativ zugeordneten Wechselzeichen-Flüssigkristallzellen erstrecken. Wenn dann für die Klebe-Befestigung solcher geformter Lichtleitkörper an der Deckscheibe ebenfalls auf eine Brechungs-Anpassung (wie oben für die Zellenbefestigung beschrieben) geachtet wird und die Rückseite dieser Zeichen-Körper als Lichtaustrittsflächen gestaltet werden (beispielsweise durch Aufrauhung oder durch Lack-Beschichtung), dann wird die geometrische Festzeichen-Konfiguration in der optisch wirksamen Zellenebene hinter der betrachterseitigen Frontfläche der Deckscheibe sichtbar, ohne daß zwischen Wechselzeichen und Festzeichen noch ernsthafte Parallaxeprobleme auftreten können.

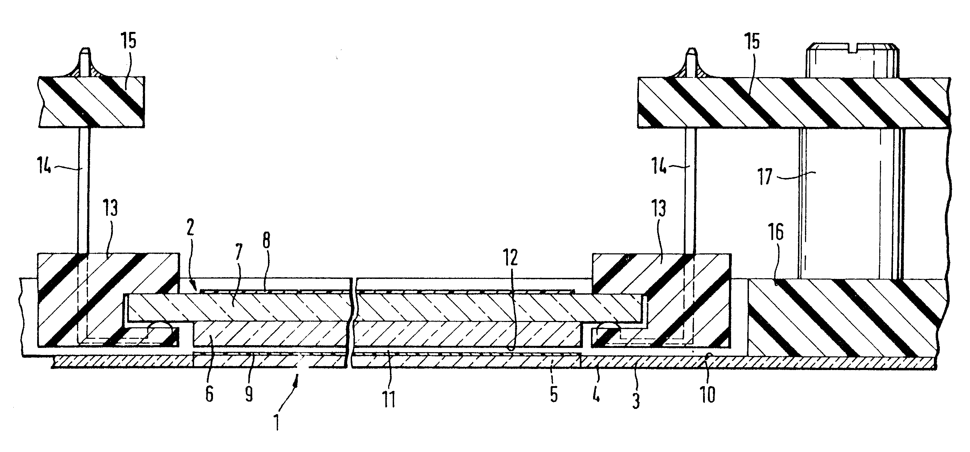

Zusätzliche Alternativen und Weiterbildungen sowie weitere Merkmale und Vorteile der Erfindung ergeben sich aus den weiteren Ansprüchen und, auch unter Berücksichtigung den Darlegungen in der Zusammenfassung, aus nachstehender Beschreibung eines in der Zeichnung unter Beschränkung auf das Wesentliche stark abstrahiert und nicht ganz maßstabsgerecht skizzierten bevorzugten Ausführungsbeispiels zur erfindungsgemäßen Lösung. Die einzige Figur der Zeichnung zeigt einen Ausschnitt aus einer Anzeigeeinrichtung im Querschnitt.

Die elektrooptische Anzeigeeinrichtung 1 zur Darbietung von Wechselinformationen mittels TN-Flüssigkristall-Zellen 2 weist sichtseitig eine entspiegelte, großflächige Abdeckfolie oder Deckscheibe 3 auf, in der durch entsprechende Materialbeeinflussung oder Bedruckung in undurchsichtiger Umgebung 4 transmissive (transparente) Fenster-Bereiche 5 ausgebildet - beispielsweise beim Bedrucken freigespart - sind.

Hinter jedem Fenster-Bereich 5 ist eine im Vergleich zur Gesamt-Anzeigeeinrichtung 1 kleinflächige Flüssigkristallzelle 2, beispielsweise zur Wechselinformationsdarbietung durch elektrische Ansteuerung segmentierter Elektroden, angeordnet. In der Zeichnung ist nur symbolisch vereinfacht berücksichtigt, daß eine solche Zelle 2 im wesentlichen aus einer betrachterseitig gelegenen Frontscheibe 6 und einer rückwärtigen Scheibe 7, zwischen denen das elektrooptisch aktive Flüssigkristall-Material (nicht zeichnerisch dargestellt) eingeschlossen ist, besteht; mit einem auf der rückwärtigen Scheibe 7 angeordneten hinteren Polfilter oder Polarisator 8. Die Funktion einer solchen TN-Zelle 2 bedingt außerdem sichtseitig einen Front-Polfilter, auch als Analysator 9 bezeichnet.

Wenn der Analysator 9, wie bei herkömmlichen TN-Zellen 2 üblich, auf der betrachterseitigen Oberfläche 12 der Frontscheibe 6 angeordnet ist, bedarf es zur Vermeidung von kontrastmindernden Brechungs- und Reflexerscheinungen einer auf die einander benachbarten Materialien abgestimmten optischen Ankopplung, beispielsweise mittels eines klaren Klebermaterials, bei der Montage der Zelle 2 hinter dem Fensterbereich 5 der Deckscheibe 3. Die Realisierung dieser Ankopplung ist aber optisch kritisch, nicht nur hinsichtlich des eingesetzten Verbindungsmaterials zwischen der Rückseite 10 der Deckscheibe 3 und einem frontseitigen Analysator auf der Zelle 2, sondern auch hinsichtlich der erforderlichen Gleichförmigkeit beim Ankleben der Zelle 2 hinter der Deckscheibe 3.

Diese produktionstechnischen Erschwernisse lassen sich vermeiden, indem auf eine optische Ankopplung zwischen der Deckscheiben-Rückseite 10 und der Zelle 2 verzichtet wird - indem nämlich dort ein (hinsichtlich seines lichten Abstandes und der Gleichförmigkeit dieses Abstandes unkritischer) Luftspalt 11 bei der Montage der Zelle 2 hinter der Deckscheibe 3 eingehalten wird.

Um störende Kontrastminderung bei reflexivem Betrieb der Anzeigeeinrichtung 1 (aufgrund optischer Reflexionseffekte durch den Deckscheiben-Fensterbereich 5 hindurch) an der sichtseitigen Oberfläche der Zelle 2 zu vermeiden, wird die Zelle 2 nur rückwärtig mit einem Polfilter 8 ausgestattet, aber nicht auch auf der betrachterseitigen Oberfläche 12 der Frontscheibe 6; vielmehr wird der Analysator 9 unmittelbar auf die Rückseite 10 der Deckscheibe 3 geklebt. Dadurch ist bei der Betrachtung der Zelle 2 (nämlich durch den Fensterbereich 5 der Deckscheibe 3 hindurch) die Wirkung des Analysators 9 für das TN-Display wieder gegeben; aber die zwangsläufig auf der betrachterseitigen Zellen-Oberfläche 12 auftretenden Reflexionen werden durch den davorliegenden Analysator 9 weitestgehend absorbiert, also vom Betrachter durch den Fensterbereich 5 hindurch dann nicht mehr störend wahrgenommen. So ist der optische Effekt, also insbesondere der Kontrast im reflexiven Betrieb, praktisch ebensogut, wie bei einer mit Analysator ausgestatteten Zelle in optimierter optischer Ankopplung an die Rückseite 10 der Deckscheibe 3; ohne daß die bei solcher optischer Ankopplung auftretenden, insbesondere produktionstechnischen Schwierigkeiten gegeben sind.

Wie in der Zeichnung berücksichtigt, ist es zweckmäßig, die Rückseite 10 der Deckscheibe 3 nur im Fenster-Bereich 5 mit einem Analysator 9 zu bekleben; so daß sich kostspielige großflächige Polfilter-Folien erübrigen und wechselseitige Verträglichkeiten beispielsweise beim Bedrucken der Deckscheiben-Rückseite 10 in der Fenster-Umgebung 4 nicht beachtet werden müssen.

Für die konstruktive Realisierung des Luftspaltes 11 zwischen dem Analysator 9 und der betrachterseitigen Zellen-Oberfläche 12, dessen Größenordnung bei einem Millimeter und darunter liegen kann, können Distanzkörper vorgesehen sein.

Es genügt aber, wie in der Zeichnung berücksichtigt, die Zelle 2 (mechanisch leicht auswechselbar) in elektromechanischen Kontaktierungsanschlüssen 13 zu haltern, die ihrerseits z.B. über Anschlußstifte 14 von wenigstens einer Leiterplatte 15 getragen werden; mit Verankerung an der Rückseite eines Anzeigegehäuse-Frontteiles 16 mittels Abstandshaltern 17. Es können also die herkömmlichen Einbaumaßnahmen der Display-Technologie Anwendung finden, da Größe und Gleichförmigkeit des Luftspalts 11 unkritisch sind. Aus gleichem Grunde braucht die Deckscheibe 3 keine starre Platte zu sein; es genügt ihre Ausführung als eine die Sichtseite der Anzeigeeinrichtung 1 gestalterisch bestimmende geschlossene Abdeckfolie, die mit Festzeichen-Symbolen und mit das Design unterstützenden Grafiken (in der Zeichnung nicht berücksichtigt) ausgestattet sein kann.

## Patentansprüche

1. Großflächige elektrooptische Anzeigeeinrichtung (1) zum Darbieten von Wechselinformationen mittels Flüssigkristallzellen (2), aufweisend:
eine Vorder- und Rückseite besitzende Deckscheibe (3) mit einem ersten Fensterbereich (5); und
eine erste Flüssigkristallzelle (2), die auf der Rückseite der Deckscheibe (3) hinter dem ersten Fensterbereich (5) angeordnet ist; wobei die Rückseite des ersten Fensterbereiches (5) mit einer Polarisatorfolie (9) beklebt ist und die der Deckscheibe (3) abgewandte Seite der ersten Flüssigkristallzelle (2) mit einem Polarisator (8) bestückt ist;
dadurch gekennzeichnet,
daß die Deckscheibe (3) weitere gegenüber den Abmessungen der Deckscheibe (3) kleine Fensterbereiche (5) mit dahinter angeordneten Flüssigkristallzellen (2) besitzt;
daß die Deckscheibe (3) aus Kunststoff besteht;
daß die Deckscheibe (3) sichtseitig entspiegelt und mit Ausnahme der Fensterbereiche (5) undurchsichtig ist; und
daß die Flüssigkristallzellen (2) mit konstantem, endlichem Abstand zur Deckscheibe an einem Anzeigegehäuse-Frontteil (16) gehaltert sind.

2. Anzeigeeinrichtung nach Anspruch 1,
dadurch gekennzeichnet,
daß der endliche, konstante Abstand zwischen der Deckscheibe (3) und den Flüssigkristallzellen (2) einen Luftspalt (11) darstellt, der mittels Distanzkörpern zwischen der jeweiligen Flüssigkristallzelle (2) und der gemeinsamen Deckscheibe (3) definiert ist.

3. Anzeigeeinrichtung nach Anspruch 1 oder 2,
dadurch gekennzeichnet,
daß jede Flüssigkristallzelle (2) unter Einhaltung des den endlichen konstanten Abstand zwischen der Deckscheibe (3) und der jeweiligen Flüssigkristallzelle (2) definierenden Luftspaltes (11) hinter der Deckscheibe (3) mittels einer Leiterplatte (15) gehaltert ist, die einerseits mittels Abstandshaltern (17) an der Rückseite des Anzeigegehäuse-Frontteiles (16) befestigt ist und andererseits die Flüssigkristallzellen (2) mittels Anschlußstiften (14) hält, die sich von der Leiterplatte (15) zu Kontaktierungsanschlüssen (13) an den Flüssigkristallzellen (2) erstrecken.

4. Anzeigeeinrichtung nach einem der vorangehenden Ansprüche,
dadurch gekennzeichnet,
daß auf der Deckscheibe (3) eine lokale Einfärbung oder Bedruckung zur Darstellung von Festzeichen-Informationen vorgesehen ist.

5. Anzeigeeinrichtung nach einem der vorangehenden Ansprüche,
dadurch gekennzeichnet,
daß die Deckscheibe (3) mit durchscheinenden Festzeichen-Freisparungen versehen ist, hinter denen Lichtleitkörper angeordnet sind.

## Claims

1. A large-area electrooptical display device (1) for presenting varying items of information by means of liquid crystal cells (2), having:
a cover plate (3) possessing a front and a rear side, with a first window region (5); and
a first liquid crystal cell (2) which is arranged on the rear side of the cover plate (3) behind the first window region; in which respect a polarizer foil (9) is adhered to the rear side of the first window region (5) and that side of the first liquid crystal cell (2) which is remote from the cover plate (3) is provided with a polarizer (8); characterised in that the cover plate (3) possesses further window regions (5), which are small as compared with the dimensions of the cover plate (3), with liquid crystal cells (2) arranged therebehind;
in that the cover plate (3) consists of plastics material; in that the cover plate (3) is non-reflective on the viewing side and with the exception of the window regions (5) is nontransparent; and
in that the liquid crystal cells (2) are held at a constant finite distance from the cover plate on a display-housing front part (16).

2. A display device according to claim 1, characterised in that the finite constant distance between the cover plate (3) and the liquid crystal cells (2) represents an air gap (11) which is defined by means of distance bodies between the respective liquid crystal cell (2) and the common cover plate (3).

3. A display device according to claim 1 or 2, characterised in that each liquid crystal cell (2) is held, along with adherence to the air gap (11) defining the finite constant distance between the cover plate (3) and the respective liquid crystal cell (2), behind the cover plate (3) by means of a printed circuit board (15), which on the one hand is fastened by means of distance pieces (17) to the rear side of the front part (16) of the display housing and on the other hand holds the liquid crystal cells (2) by means of connection pins (14) which extend from the printed circuit board (15) to contacting connections (13) on the liquid crystal cells (2).

4. A display device according to any one of the preceding claims, characterised in that a local staining or printing for the representation of fixed-sign items of information is provided on the cover plate (3).

5. A display device according to any one of the preceding claims, characterised in that the cover plate (3) is provided with translucent fixed-sign left-clear portions behind which light conducting bodies are arranged.

## Revendications

1. Dispositif d'affichage électro-optique de grande surface (1) pour présenter des informations variables au moyen de cellules à cristaux liquides (2) comprenant:
une plaque de recouvrement (3) comportant un côté avant et un côté arrière, avec une première région de fenêtre (5); et
une première cellule à cristaux liquides (2) qui est disposée sur le côté arrière de la plaque de recouvrement (3), à l'arrière de la première zone de fenêtre (5); une feuille de polarisation (9) étant collée sur le côté arrière de la première zone de fenêtre (5) et le côté de la première cellule (2) à cristaux liquides qui est à l'opposé de la plaque de recouvrement (3) étant munie d'un polarisateur (8),
caractérisé en ce que:
la plaque de recouvrement (3) comprend d'autres zones de fenêtre (5) qui sont petites par rapport aux dimensions de la plaque de recouvrement (3), avec des cellules à cristaux liquides (2) disposées à l'arrière,
la plaque de recouvrement (3) est en matière synthétique,
la plaque de recouvrement (3) est antireflet sur un côté et non transparente à l'exception des zones de fenêtre (5), et
les cellules à cristaux liquides (2) sont maintenues sur une partie frontale (16) du boîtier d'affichage à une distance constante et finie de ladite plaque de recouvrement.

2. Dispositif d'affichage selon la revendication 1, caractérisé en ce que la distance constante et finie entre la plaque de recouvrement (3) et les cellules à cristaux liquides (2) est formée par un interstice d'air (11) qui est défini par des éléments d'écartement entre les cellules à cristaux liquides respectives (2) et l'ensemble de la plaque de recouvrement (3).

3. Dispositif d'affichage selon la revendication 1 ou 2, caractérisé en ce que chaque cellule à cristaux liquides (2) est maintenue à l'arrière de la plaque de recouvrement (3) au moyen d'une plaque conductrice (15) en conservant la distance constante et finie entre la plaque de recouvrement (3) et la cellule à cristaux liquides respective (2), plaque conductrice qui d'une part est fixée au moyen d'éléments d'écartement (17) au côté arrière de la partie frontale (16) du boîtier d'affichage, et d'autre part maintient les cellules à cristaux liquides au moyen de tiges de raccordement (14) qui s'étendent depuis la plaque conductrice jusqu'à des raccords de contact (13) avec les cellules à cristaux liquides (2).

4. Dispositif d'affichage selon l'une quelconque des revendications précédentes, caractérisé en ce qu'une coloration locale ou une impression pour représenter des informations fixes est prévue sur la plaque de recouvrement (3)

5. Dispositif d'affichage selon l'une quelconque des revendications précédentes, caractérisé en ce que la plaque de recouvrement (3) est munie d'évidements fixes transparents à l'arrière desquels sont disposés des corps guides de lumière.
